# EUROPÄISCHE PATENTSCHRIFT

(11) **EP 2 559 958 B1**
(45) Veröffentlichungstag und Bekanntmachung des Hinweises auf die Patenterteilung: **15.03.2017**
(21) Anmeldenummer: 12179332.7
(22) Anmeldetag: 06.08.2012
(51) Int. Cl.: F25B 49/00, G01F 23/24

(54) **Anordnung und Verfahren zur Kältemittelfüllstandsüberwachung und -regelung in Kälteanlagen**
Assembly and method for coolant fill level monitoring and regulation in refrigeration plants
Agencement et procédé pour la surveillance et la régulation du niveau de remplissage d'un moyen de refroidissement dans des installations de refroidissement

(30) Priorität: 17.08.2011 DE 102011052775
(43) Veröffentlichungstag der Anmeldung: 20.02.2013
(73) Patentinhaber: Thermofin GmbH, 08468 Heinsdorfergrund/Reichenbach (DE)
(72) Erfinder: Koch, Klaus, 44534 Lünen (DE)
(74) Vertreter: Sperling, Thomas

(56) Entgegenhaltungen:
- FR-A1- 2 006 178
- JP-A- S 628 019
- JP-A- H06 260 689
- JP-A- 2002 286 333
- JP-A- 2006 250 480
- US-A- 5 297 393

## Beschreibung

Die Erfindung betrifft eine Anordnung und ein Verfahren zur Kältemittelfüllstandsüberwachung und -regelung in Kälteanlagen.

Die Kontrolle der Kältemittelfüllmengen in Kälteanlagen wird bislang im Stand der Technik auf verschiedene Weise technisch gelöst. Es sind Verfahren bekannt, die den Kältemittelfüllstand in geeigneten Komponenten der Kälteanlage überwachen. Diese Methode nutzt den Umstand, dass der Kältemittelfüllstand, beispielsweise im Kondensator, im stationären Zustand weitgehend konstant ist. Bekannt sind der Einsatz von Magnetsonden in Kältemittelsammlern sowie Ultraschallsonden in Kältemittelsammlern oder Flüssigkeitsleitungen sowie Schwingungssonden in Kältemittelsammlern zur Kältemittelfüllstandsüberwachung. Alternativ zu dieser Methode der Füllstandsüberwachung sind Gaswarneinrichtungen bekannt, die mittels Sensoren stofflich geringe Konzentrationen der Kältemittel bei deren Auftreten außerhalb der Kälteanlage aufspüren und entsprechende Warnungen ausgeben.

Leider erfüllen die im Stand der Technik bekannten Systeme (wie in JP2002-286333, JP62-008019, JP62-60689 oder FR-2006178) teilweise nicht die gesetzlichen Bestimmungen, die wegen der Umweltbedenklichkeit diverser Kältemittel beispielsweise in Deutschland sehr streng sind.

So werden Füllungsverluste oft erst von den Systemen erkannt und gemeldet, wenn die Kühlstellen schon Temperaturwarnungen ausgegeben haben. Weiterhin betrifft ein Problem des Standes der Technik die Verlässlichkeit und den Funktionsnachweis der technischen Systeme zur Kältemittelfüllstandsüberwachung. Im Ergebnis der Unzulänglichkeiten der Verfahren nach dem Stand der Technik sind zum Teil auch große Kältemittelfüllungsverluste nur schwer zu verhindern und häufige Fehlermeldungen und unzutreffende Fehlermeldungen der Überwachungssysteme üblich. Es ist mit den Verfahren nach dem Stand der Technik auch kein effizienter Nachweis der Dichtheit der Anlagen in Bezug auf die Kältemittelsysteme möglich.

Ausgehend von diesem Stand der Technik liegt der Erfindung die Aufgabe zugrunde, eine Anordnung und ein Verfahren zur Kältemittelfüllstandsüberwachung und -regelung in Kälteanlagen zur Verfügung zu stellen, welches effizient und über die gesamte Lebensdauer der Kälteanlage Kältemittelfüllstandsrückgänge und damit Kältemittelverluste überwacht und registriert und diese dann gezielt ausgeglichen werden können. Weiterhin ist es Aufgabe der Erfindung, ein Verfahren zur Überprüfung der Verlässlichkeit und Funktionsfähigkeit der Anordnung zur Verfügung zu stellen.

Die Aufgabe wird durch eine Anordnung und ein Verfahren gemäß den selbstständigen Patentansprüchen gelöst. Weiterbildungen sind in den Unteransprüchen angegeben.

Insbesondere wird die Aufgabe der Erfindung durch eine Anordnung zur Kältemittelfüllstandsüberwachung und -regelung in Kälteanlagen gelöst, welche als Kälteanlagenkomponente mit gleichbleibendem Niveau des flüssigen Kondensates einen Kondensator mit einem Dampfeintritt und einem Kondensataustritt für ein Kältemittel aufweist.
Weiterhin weist die Anordnung einen thermisch vom Kondensat des Kältemittels im Kondensator isolierten Referenzverdampfer auf, wobei der Referenzverdampfer eine Einspritzbohrung und eine Heizung für das Kondensat und einen Dampfaustritt für den Kältemitteldampf aufweist. Im Kältemitteldampfraum des Referenzverdampfers ist weiterhin ein Temperatursensor zur Messung der Temperatur des Kältemittelnassdampfes vorgesehen.

Eine vorteilhafte Weiterbildung der Erfindung besteht darin, dass der Referenzverdampfer im Kondensator selbst angeordnet und in diesen integriert ausgebildet ist.

Besonders vorteilhaft ist, wenn der Temperatursensor und die Heizung des Referenzverdampfers ohne Druckabbau in der Kälteanlage auswechselbar ausgeführt sind. Dies ist beispielsweise dadurch zu erreichen, dass der Temperatursensor in einem Hüllrohr platziert ist, welches in den Kältemitteldampfraum des Referenzverdampfers hineinragt. Gleichermaßen kann die Heizung außerhalb des geschlossenen Kältemittelsystems angeordnet sein und die Wärme wird über Wärmeleitung in den Referenzverdampfer eingebracht.

Nach einer besonders vorteilhaften Ausgestaltung der Erfindung ist ein Ausgleichsbehälter zur Aufnahme von flüssigem Kältemittel zur Absenkung des Kondensatniveaus im Kondensator, beziehungsweise im Kondensatoraustrittskollektor, unter das geodätische Niveau der Einspritzbohrung vorgesehen. Damit wird erreicht, dass über das Füllen des Ausgleichsbehälters das flüssige Kältemittel aus dem Kondensator abgeleitet wird und damit das Kondensatniveau unter das Niveau der Einspritzbohrung sinkt. Infolgedessen kann kein flüssiges Kältemittel über die Einspritzbohrung aus dem Kondensator in den Referenzverdampfer gelangen. Dies ist für einen Selbsttest und die Funktionsüberprüfung der Anordnung von besonderer Bedeutung.

Weiterhin ist die Ölrückführung in die Kondensatableitung integriert, sodass das flüssige Öl das Flüssigkeitsniveau im Kondensator nicht verfälscht.

Eine weitere vorteilhafte Ausgestaltung der Erfindung besteht darin, dass ein Durchflussmessgerät an einem Kältemittelfüllanschluss in die Anordnung integriert ist. Hierdurch kann in Abhängigkeit der Ergebnisse der Füllstandstests Kältemittel über den Kältemittelfüllanschluss dosiert und gemessen sowie protokolliert in die Kälteanlage eingespeist werden.

Ein erfindungsgemäßes Verfahren zur Kältemittelfüllstandsüberwachung und - regelung in Kälteanlagen besteht darin, dass eine Kältemittelbefüllung, beziehungsweise eine Auffüllung der Kälteanlage mit Kältemittel dann erfolgt, wenn die Differenztemperatur dT der Temperatur T6 im Kältemitteldampfraum des Referenzverdampfers und der Kondensattemperatur T_{K} des Kältemittels größer als eine vorgebbare Grenzdifferenztemperatur dTG1 ist. Dabei ist die vorgebbare Grenzdifferenztemperatur dTG1 größer oder gleich 0 und dT kann mit der Beziehung dT = T6 - T_{K} wiedergegeben werden.

Nach einer vorteilhaften Ausgestaltung der Erfindung erfolgt die Kältemittelbefüllung der Kälteanlage bis zum Erreichen der vorgebbaren Grenzdifferenztemperatur dTG1 über die Messeinrichtung.

In besonders vorteilhafter Weise wird die Messanordnung mit einem Selbsttest überprüft, womit sicher gestellt wird, dass die Methode funktioniert und kein Heizungs- oder Temperatursensorfehler Ursache für eine Meldung "Füllstandsmangel" ist.
Eine Weiterbildung des Verfahrens besteht somit darin, dass in vorgebbaren Intervallen das Kondensatniveau des Kältemittels im Kondensator unter das geodätische Niveau der Einspritzbohrung abgesenkt wird, um mit einem Selbsttest die Funktionsfähigkeit der Anordnung zu überprüfen. Wenn nach dem Absenken des Flüssigkeitsniveaus des Kondensats unter die Einspritzbohrung die Differenztemperatur dT der Temperatur T6 im Kältemitteldampfraum des Referenzverdampfers und der Kondensattemperatur T_{K} des Kältemittels größer als eine vorgebbare Grenzdifferenztemperatur dTG2 ist, wird der Selbsttest als erfolgreich gewertet und damit die Funktionsfähigkeit der Anordnung bestätigt.

Sofern die Temperaturdifferenz dT nicht größer als dTG2 ist, liegt eine Störung der Anordnung vor. Nach einer vorteilhaften Ausgestaltung der Erfindung werden als defekte Komponenten in der Störmeldung die Heizung und der Thermosensor des Referenzverdampfers akustisch oder optisch gekennzeichnet.

Die vorgebbaren Grenzdifferenztemperaturen dTG1 und dTG2 können je nach Anlagenspezifik gleich oder ungleich und dabei größer oder gleich 0 sein.

Die Konzeption der Erfindung besteht darin, dass die Kältemittelfüllung am Kältemittelfüllstandsniveau einer geeigneten Komponente eines Kältemittelkreislaufes, beispielsweise am Kondensator, überwacht wird. Diesem Erfindungsgedanken folgend, sind Kältemittelsammler und Kältemittelabscheider oder Gasausgleichskollektoren geeignete Komponenten für die Integration eines Referenzverdampfers, da in diesen Komponenten Gasphase und Flüssigphase auf gleichem Druckniveau vorliegen.

Besonders vorteilhaft ist hervorzuheben, dass die Situation von der Kältemittelerstbefüllung über Kältemittelnachfüllungen von der Installation der Anlage über deren gesamte Lebensdauer verfolgt und protokolliert werden kann. Je nach Anlagenspezifik ist es möglich, Füllungsverluste sogar im Milligrammbereich aufzuzeichnen und zu melden und es ist somit ein lückenloser Nachweis über die Dichtheit und Funktion der Anlage gegeben.

Besonders vorteilhaft ist, dass durch die kontinuierliche Füllstandsüberwachung ein Kältemittelverlust quasi unverzüglich nachgewiesen und auf aufwendige Leckagetests verzichtet werden kann. Somit kann im Unterschied zu anderen Verfahren, die mit der Unterbrechung des Betriebes der Kälteanlage verbunden sind, ein kontinuierlicher Betrieb der Anlage gesichert werden.
Somit weist die erfindungsgemäße Anordnung nach, dass die Anlage dicht ist und es kann auch im Hinblick auf die Konstruktion neuer Anlagen mit geringeren Kältemittelmengen kalkuliert werden, da Kältemittelmengenschwankungen durch Verluste sicherer auszuschließen sind.

Ein weiterer Aspekt der Erfindung besteht darin, dass bei der Füllstandsanalyse der Anteil des Kältemittelöles, durch eine Einbindung der Ölrückführung in den Kondensatablauf aus dem Kondensator, beziehungsweise durch die Einbindung in einen dem Kondensator nachgeschalteten Ausgleichsbehälter, das Kältemittelniveau des flüssigen Kondensats nicht beeinflusst.

Die reproduzierbare und protokollierbare Befüllung der Anlage bei festgestelltem Kältemittelmangel erfolgt mittels einer Durchflussmessung und von der Regeleinrichtung wird sowohl die ursächliche Undichtigkeit als auch die nachgefüllte Kältemittelmenge kontinuierlich protokolliert. Eine Quittierung des Füllungsmangels kann nur bei der Nachfüllung über die Durchflussmessung erfolgen, wodurch ein lückenloser Nachweis von der Erstbefüllung über die Auffüllungen und die Leckagen über die gesamte Laufzeit der Anlage möglich ist.

Ein weiterer signifikanter Vorteil der Anordnung besteht darin, dass die Anlage bei einem Defekt der Messanordnung nicht entleert werden muss, da die potentiell defekten Komponenten Temperatursensor und Heizung des Referenzverdampfers ausgewechselt werden können, ohne den Anlagenbetrieb zu unterbrechen.

Ganz allgemein besteht das Prinzip der Erfindung darin, dass durch den Referenzverdampfer ein quasi abgeschlossener Bilanzraum in einem Isoliergehäuse geschaffen wird, der über die Einspritzbohrung und das Prinzip der kommunizierenden Röhren mit dem Füllstand in dem Kondensator gekoppelt ist. Sinkt der Füllstand des Kondensators unter die Einspritzbohrung, strömt kein flüssiges Kältemittel mehr in den Referenzverdampfer ein und das kontinuierlich verdampfte Kältemittel wird nach Übergang in die Dampfphase erhitzt und schließlich überhitzt. Diese Überhitzung wird von dem Temperatursensor im Dampfraum des Referenzverdampfers gemessen und über eine Regeleinrichtung ausgewertet. Im Ergebnis der Auswertung wird ausgegeben, ob ein Füllungsmangel vorliegt und entsprechend eine Nachbefüllung in Gang gesetzt wird, was auch automatisiert erfolgen kann.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- Fig. 1:: Anordnung zur Kältemittelfüllstandsüberwachung
- Fig. 2:: Prinzipdarstellung Referenzverdampfer
- Fig. 3:: Verfahrensablauf Kältemittelauffüllung
- Fig. 4:: Verfahrensablauf Selbsttest der Anlage zur Kältemittelfüllstandsüberwachung

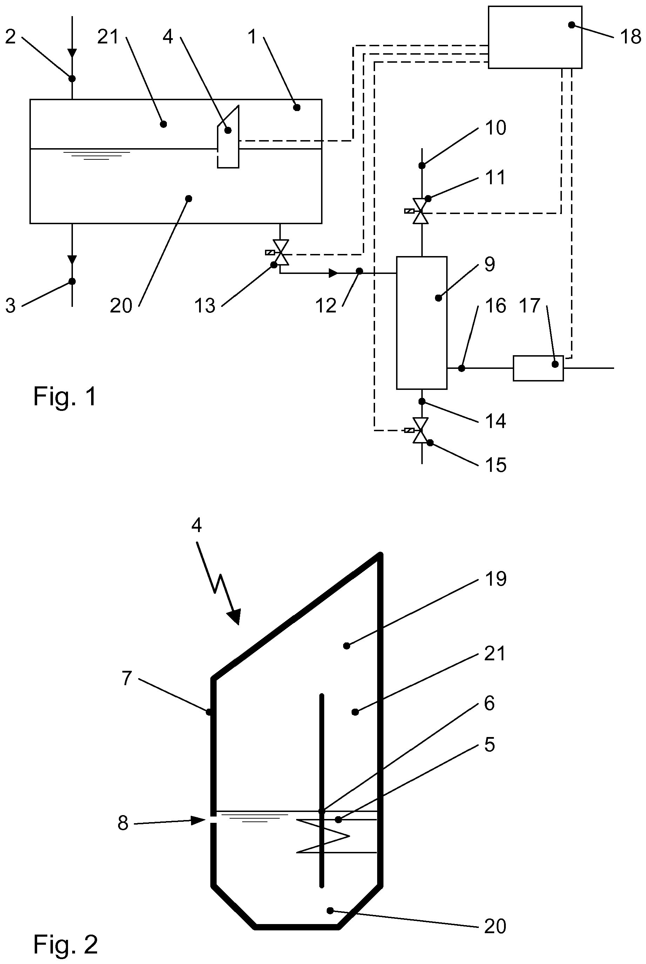

In Figur 1 ist eine Anordnung zur Kältemittelfüllstandsüberwachung und - regelung in einer Kälteanlage schematisch dargestellt. Konzeptionsgemäß wird der Kältemittelfüllstand in einer Komponente einer Kälteanlage überwacht, in welcher die Niveauschwankungen des flüssigen Kältemittels im normalen stationären Zustand der Kälteanlage nur sehr gering sind. Daraus leitet sich die Messstrategie ab, dass Schwankungen des Füllstandes nach unten, beziehungsweise eine Abnahme des Füllstandsniveaus der flüssigen Phase des Kältemittels, auf einen Verlust von Kältemittel in der Anlage hindeuten. Dieses Prinzip der Überwachung des Kältemittelfüllstands der flüssigen Phase in einer Komponente der Kälteanlage wird in verschiedenen Verfahren zum Leckagenachweis angewandt und stellt somit eine gesicherte Grundlage des Verfahrens dar.

In aller Regel wird als Komponente der Kälteanlage der Kondensator 1 ausgewählt, da hier die beschriebenen Bedingungen für den Einsatz des vorangehend erläuterten Messprinzips vorliegen.

Der Kondensator 1 ist mit einem Dampfeintritt 2 und einem Kondensataustritt 3 funktionsgemäß verbunden. Im Kondensator 1 kommt es zu einer Trennung der flüssigen Phase 20 des Kältemittels, auch als flüssiges Kältemittel oder Kondensat bezeichnet, und dem Kältemitteldampf 21. Gemäß Figur 1 ist nach einer bevorzugten Ausgestaltung der Erfindung ein Referenzverdampfer 4 in den Kondensator 1 integriert ausgeführt.
Alternativ zu dieser Ausgestaltung kann der Referenzverdampfer auch außerhalb des Kondensators 1 angeordnet sein, sofern nur dem Prinzip der kommunizierenden Röhren folgend eine Verbindung des Flüssigkeitsniveaus aus dem Kondensator 1 mit dem Referenzverdampfer 4 über eine Verbindung gewährleistet ist.

Weiterhin weist die Anordnung zum Selbsttest der Mess- und Überwachungsfunktion einen Ausgleichsbehälter 9 zur Aufnahme von flüssigem Kältemittel 20 aus dem Kondensator 1 auf. Der Ausgleichsbehälter 9 ist über eine Kältemittelflüssigkeitsabführung 12 mit dem Kondensator 1 verbunden und die Kältemittelabfuhr wird über ein Ventil 13 zur Kältemittelabführung gesteuert. Am Ausgleichsbehälter 9 ist die Ölrückführung 10 mit einem Ventil zur Ölrückführung 11 angeordnet. Durch die Einmündung der Ölrückführung 10 in den Ausgleichsbehälter 9 werden Flüssigkeitsniveauschwankungen durch das Kältemittelöl im Kondensator 1 weiter reduziert, da das flüssige Kältemittelöl keine Flüssigkeitsniveauschwankungen im Kondensator 1 mehr verursachen kann.

Der Ausgleichsbehälter 9 weist weiterhin eine Saugleitung 14 mit einem Ventil 15 auf, über den der Behälterinhalt an flüssigem Kältemittel zu den jeweiligen Kühlaufgaben abgezogen werden kann. Nach der dargestellten Ausgestaltung wird die Kältemittelbefüllung der Anordnung über den Kältemittelfüllanschluss 16 und einem Durchflussmessgerät 17 zur Protokollierung der in die Anlage einströmenden Kältemittelmenge realisiert. Die Funktion der Anordnung hinsichtlich der automatisierten Nachfüllung von Kältemittel bei Kältemittelfüllstandsmangel, wie auch der Selbsttest der Mess- und Überwachungseinrichtung, wird mittels einer Regeleinrichtung 18 koordiniert.

In Figur 2 ist ein Referenzverdampfer 4 prinziphaft dargestellt. Der Referenzverdampfer 4 besteht aus einem hohlzylindrischen Gehäuse, welches seitlich und unten zur Aufnahme von flüssigem Kältemittel verschlossen ist, jedoch nach oben für den Austritt von Kältemitteldampf dampfdurchlässig ausgebildet ist. In der seitlichen Begrenzung ist eine Einspritzbohrung 8 vorgesehen, durch welche flüssiges Kältemittel 20 in das Innere des Referenzverdampfers 4 eintritt, sofern der Flüssigkeitsspiegel außerhalb des Referenzverdampfers 4 die Einspritzbohrung 8 erreicht.

Das Gehäuse des Referenzverdampfers 4 taucht somit funktionsgemäß in das Kondensat 20 ein und es muss zur Vermeidung, beziehungsweise zur Minimierung der Wärmeübertragung aus dem Inneren des Referenzverdampfers 4 an das Kondensat 20 im Kondensator 1 mit einer thermischen Isolationsschicht 7, zumindest in den Bereichen, in denen das flüssige Kältemittel aus dem Kondensator ansteht, thermisch isoliert sein.

Das Innere des Referenzverdampfers 4 weist einen Bereich mit flüssigem Kältemittel 20 und einen Kältemitteldampfraum 19 auf. Im Bereich des flüssigen Kältemittels 20 ist eine Heizung 5 vorgesehen, die kontinuierlich das flüssige Kältemittel 20 verdampft. Im Kältemitteldampfraum 19 ist ein Temperatursensor 6 angeordnet, der die Temperatur des Kältemitteldampfes 21 misst und an die Regeleinrichtung ausgibt.

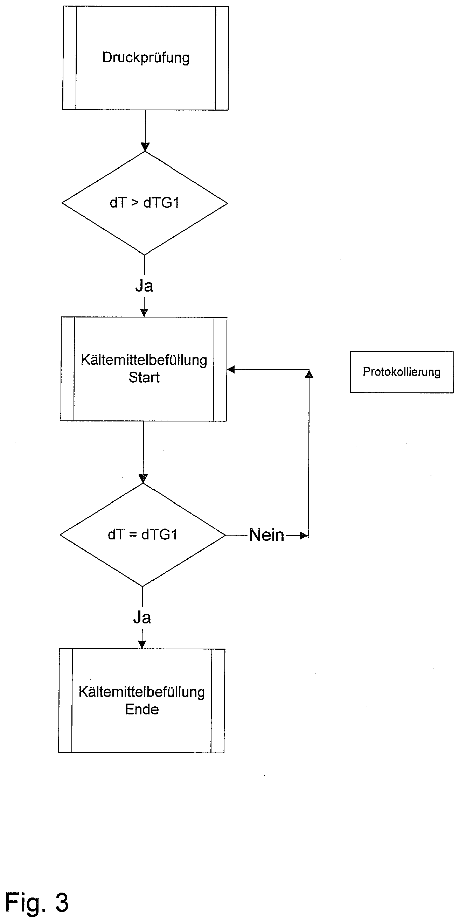

In Figur 3 ist das Verfahren der Kältemittelbefüllung als Ablaufdiagramm prinziphaft dargestellt. Zunächst ist für den Fachmann selbstverständlich, dass ein druckdichtes System vorliegen muss und infolgedessen gegebenenfalls eine Druckprüfung zu erfolgen hat.
Die nachfolgende Beschreibung des Verfahrensablaufs bezieht sich auf die Komponenten der Anordnung zur Kältemittelfüllstandsüberwachung, wie sie in den Figuren 1 und 2 dargestellt und beschrieben ist.
Von der Anordnung zur Kältemittelfüllstandsüberwachung in Kälteanlagen wird nun die Kondensattemperatur T_{K} und die Temperatur des Temperatursensors 6 T₆ im Referenzverdampfer 4 verglichen. Dazu sind beide Temperaturen in der Regeleinrichtung 18 zu verarbeiten.

Die Ermittlung der Temperaturdifferenz erfolgt nach der Beziehung T₆ - T_{K} = dT.

Im Regler wird nunmehr geprüft, ob die ermittelte Temperaturdifferenz dT größer als eine vorgebbare Grenztemperaturdifferenz dTG1 nach der Beziehung dT > dTG1 ist.

Sofern dies der Fall ist, muss von einer Überhitzung des Kältemitteldampfes 21 im Kältemitteldampfraum 19 des Referenzverdampfers 4 ausgegangen werden. Zu einer Überhitzung kommt es dann, wenn kein flüssiges Kältemittel 20 aus dem Kondensator 1 über die Einspritzbohrung 8 in den Referenzverdampfer 4 hineingelangt und das flüssige Kältemittel 20 vollständig verdampft ist und infolge weiterer kontinuierlicher Wärmezufuhr mittels der Heizung 5 sich der Kältemitteldampf 21 nunmehr überhitzt. Kein neues flüssiges Kältemittel 20 strömt mehr nach, wenn das Flüssigkeitsniveau im Kondensator 1 unter das geodätische Niveau der Einspritzbohrung 8 gesunken ist. Damit erhält die Regelanordnung die Anweisung, die Kältemittelbefüllung zu starten.
Die Kältemittelbefüllung erfolgt gemäß der Ausgestaltung der erfindungsgemäßen Anordnung nach Figur 1 dadurch, dass über den Kältemittelfüllanschluss 16 Kältemittel in den Ausgleichsbehälter 9 strömt und über die Saugleitung 14 und das geöffnete Ventil der Saugleitung 15 in den Kältekreislauf eingespeist wird. Dabei wird mittels eines Durchflussmessgerätes 17 die Menge des eingefüllten Kältemittels erfasst und in der Regeleinrichtung 18 protokolliert. Eine Befüllung mit zusätzlichem Kältemittel erfolgt solange, bis die Temperaturdifferenz dT gleich der Grenztemperaturdifferenz dTG1 ist. Sobald diese Bedingung erfüllt ist, ist die Kältemittelbefüllung beendet und die Kältemittelverluste der Anlage wurden ausgeglichen und dabei protokolliert.

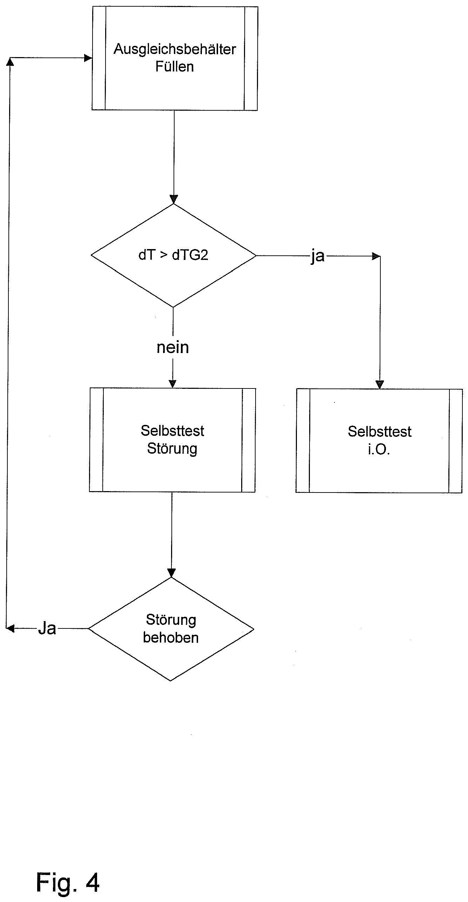

In Figur 4 ist das Verfahren des Selbsttests der Anlage als Ablaufdiagramm dargestellt. Es ist von besonderer Bedeutung sicherzustellen, dass die Anordnung zur Kältemittelfüllstandsüberwachung und Regelung in Kälteanlagen selbst störungsfrei funktioniert, um nicht unnötig Kältemittel in den Kältekreislauf einzuspeisen, was neben den verursachten zusätzlichen Kosten und der Umweltbelastung im schlimmsten Falle zu einer Verschlechterung des Wirkungsgrades führen würde. Der Selbsttest der Anordnung beginnt mit dem Füllen des Ausgleichsbehälters 9 mit Kondensat 20 aus dem Kondensator 1 durch die Kältemittelflüssigkeitsabführung 12 bei geöffnetem Ventil 13. Das Ventil 15 der Saugleitung 14 ist dabei geschlossen. Infolge der Füllung des Ausgleichsbehälters 9 sinkt das Flüssigkeitsniveau des flüssigen Kältemittels 20 im Kondensator 1 bis unter das geodätische Niveau der Einspritzbohrung 8, sodass kein flüssiges Kältemittel 20 aus dem Kondensator 1 mehr in den Referenzverdampfer 4 gelangt. Binnen kurzer Zeit ist durch die kontinuierliche Heizung 5 im Referenzverdampfer 4 das flüssige Kältemittel 20 aus dem Referenzverdampfer 4 verdampft und es beginnt sich der Kältemitteldampf 21 im Kältemitteldampfraum 19 des Referenzverdampfers 4 zu überhitzen. Der Temperaturfühler, beziehungsweise der Temperatursensor 6 im Referenzverdampfer 4, erfasst die Temperatur kontinuierlich und in der Regeleinrichtung 18 diese mit der Kondensattemperatur verglichen und die Temperaturdifferenz dT ermittelt.

Weiterhin wird in der Regeleinrichtung 18 die Temperaturdifferenz dT verglichen mit einer Grenztemperaturdifferenz dTG2, welche gleich oder verschieden von der Grenztemperaturdifferenz dTG1 im Rahmen der Kältemittelfüllung sein kann.

Sofern die Temperaturdifferenz dT größer ist als die Grenztemperaturdifferenz dTG2, ist der Selbsttest in Ordnung, da von dem Sensor ordnungsgemäß eine Überhitzung festgestellt wurde. Ist dies der Fall, wird der Ausgleichsbehälter 9 über die Saugleitung 14 durch Öffnen des Ventils 15 entleert und das Ventil 13 der Kältemittelflüssigkeitsabführung 12 ist dabei geschlossen. Infolgedessen steigt das Flüssigkeitsniveau des Kondensats 20 im Kondensator 1 wieder über die Einspritzbohrung 5 hinaus an und der Referenzverdampfer 4 erhält wieder flüssiges Kältemittel 20, welches in den Referenzverdampfer 4 einströmt und nach kurzer Zeit stellt sich wieder ein Gleichgewicht ein, so dass vom Temperatursensor 6 im Referenzverdampfer 4 keine Überhitzung mehr festgestellt wird.

Sofern das Kriterium der Differenztemperatur dT größer der Grenztemperaturdifferenz dTG2 nicht erfüllt ist, wird in die Regeleinrichtung 18 ein Signal für eine Störung ausgegeben. In diesem Fall muss die Störung behoben werden. Eine Störung der Anordnung zur Kältemittelfüllstandsüberwachung kann darin bestehen, dass zum einen der Temperatursensor 6 nicht ordnungsgemäß die Temperatur im Kältemitteldampfraum 19 des Referenzverdampfers 4 misst oder dass die Heizung 5 im Referenzverdampfer 4 ausgefallen ist und somit trotz abgesenktem Kältemittelniveau keine Überhitzung des Kältemitteldampfes 21 im Referenzverdampfer 4 erfolgt.

Nach dem Beheben der Störung wird das Prozedere des Selbsttests wiederholt, bis dieser in Ordnung ist und fehlerfrei durchläuft.

### LISTE DER BEZUGSZEICHEN

- 1: Kälteanlagenkomponente mit konstantem Kältemittelfüllstand im stationären Zustand, Kondensator
- 2: Dampfeintritt
- 3: Kondensataustritt
- 4: Referenzverdampfer
- 5: Heizung
- 6: Temperatursensor
- 7: thermische Isolationsschicht
- 8: Einspritzbohrung
- 9: Ausgleichsbehälter
- 10: Ölrückführung
- 11: Ventil Ölrückführung
- 12: Kältemittelflüssigkeitsabführung
- 13: Ventil Kältemittelflüssigkeitsabführung
- 14: Saugleitung
- 15: Ventil Saugleitung
- 16: Kältemittelfüllanschluss
- 17: Durchflussmessgerät
- 18: Regeleinrichtung
- 19: Kältemitteldampfraum des Referenzverdampfers
- 20: flüssige Phase des Kältemittels, flüssiges Kältemittel, Kondensat
- 21: Kältemitteldampf

## Patentansprüche

1. Anordnung zur Kältemittelfüllstandsüberwachung und -regelung in Kälteanlagen, aufweisend eine Kälteanlagenkomponente (1) mit einem konstanten Kältemittelfüllstand im stationären Zustand mit einem Dampfeintritt (2) und einem Kondensataustritt (3) für ein Kältemittel,-**gekennzeichnet durch** einen thermisch vom Kondensat (20) des Kältemittels in der Kälteanlagenkomponente (1) isolierten Referenzverdampfer (4), wobei der Referenzverdampfer (4) eine Einspritzbohrung (8) für Kondensat (20) aus der Kälteanlagenkomponente (1) und eine Heizung (5) sowie einen Dampfaustritt für Kältemitteldampf (21) aufweist und wobei ein Temperatursensor (6) in einem Kältemitteldampfraum (19) des Referenzverdampfers (4) und eine Regeleinrichtung (18) vorgesehen sind.

2. Anordnung nach Anspruch 1, **dadurch gekennzeichnet, dass** die Kälteanlagenkomponente (1) als Kondensator ausgebildet und der Referenzverdampfer (4) im Kondensator angeordnet ist.

3. Anordnung nach Anspruch 1 oder 2, **dadurch gekennzeichnet, dass** der Temperatursensor (6) in einem Hüllrohr angeordnet ist und/oder die Heizung (5) außerhalb des geschlossenen Kältemittelsystems angeordnet ist und die Wärme über Wärmeleitung in den Referenzverdampfer (4) eingebracht wird und dass der Temperatursensor (6) und die Heizung (5) somit ohne Druckabbau in der Kälteanlage auswechselbar ausgeführt sind.

4. Anordnung nach einem der Ansprüche 1 bis 3, **dadurch gekennzeichnet, dass** ein Ausgleichsbehälter (9) zur Aufnahme von flüssigem Kältemittel (20) zur Absenkung des Kondensatniveaus in der Kälteanlagenkomponente (1) unter das geodätische Niveau der Einspritzbohrung (8) angeordnet und mit einer absperrbaren Verbindung mit der Kälteanlagenkomponente (1) verbunden ist.

5. Anordnung nach Anspruch 4, **dadurch gekennzeichnet, dass** eine Ölrückführung (10) zur Kondensatableitung in den Ausgleichsbehälter (9) einmündet.

6. Anordnung nach einem der Ansprüche 1 bis 5, **dadurch gekennzeichnet, dass** ein Durchflussmessgerät (17) an einem Kältemittelfüllanschluss (16) der Kälteanlage angeordnet ist.

7. Verfahren zur Kältemittelfüllstandsüberwachung in Kälteanlagen nach einem der vorangegangenen Ansprüche, **dadurch gekennzeichnet, dass** eine Kältemittelbefüllung der Kälteanlage erfolgt, wenn
- die Differenztemperatur dT
der Temperatur T₆ im Kältemitteldampfraum (19) des Referenzverdampfers (4) und
der Kondensattemperatur T_{K} des Kältemittels im Kondensator (1)
- größer als eine vorgebbare Grenzdifferenztemperatur dTG1 ist.

8. Verfahren nach Anspruch 7, **dadurch gekennzeichnet, dass** die Kältemittelbefüllung der Kälteanlage bis zum Erreichen der vorgebbaren Grenzdifferenztemperatur dTG1 erfolgt.

9. Verfahren nach Anspruch 7 oder 8, **dadurch gekennzeichnet, dass**
- in vorgebbaren Intervallen das Kondensatniveau des Kältemittels im Kondensator (1) unter das geodätische Niveau der Einspritzbohrung (8) abgesenkt wird indem Kondensat in den Ausgleichsbehälter (9) abgelassen wird und wenn dabei
- die Differenztemperatur dT
der Temperatur T₆ im Kältemitteldampfraum (19) des Referenzverdampfers (4) und
der Kondensattemperatur T_{K} des Kältemittels
- größer als eine vorgebbare Grenzdifferenztemperatur dTG2 ist
- eine Störmeldung ausgegeben wird.

10. Verfahren nach Anspruch 9, **dadurch gekennzeichnet, dass** als defekte Komponenten die Heizung (5) und der Temperatursensor (6) als Störmeldung ausgegeben werden.

## Claims

1. Arrangement for refrigerant fill level monitoring and regulation in cooling systems, having a cooling system component (1) with a constant refrigerant fill level when the system is stationary with a steam inlet (2) and a condensate outlet (3) for a refrigerant, **characterised by** a reference evaporator (4) thermally insulated from the condensate (20) of the refrigerant in the cooling system component (1), whereby the reference evaporator (4) has an injection hole (8) for condensate (20) from the cooling system component (1) and a heating unit (5) and also a steam outlet for refrigerant vapour (21) and whereby a temperature sensor (6) in a refrigerant vapour space (19) of the reference evaporator (4) and a regulation unit (18) are provided.

2. Arrangement in accordance with Claim 1, **characterised in that** the cooling system component (1) is designed as a condenser and the reference evaporator (4) is arranged in the condenser.

3. Arrangement in accordance with Claim 1 or 2, **characterised in that** the temperature sensor (6) is arranged in a cladding tube and/or the heating unit (5) is arranged outside of the closed refrigerant system and the heat is introduced via heat transfer into the reference evaporator (4) and that the temperature sensor (6) and the heating unit (5) are thereby constructed so as to be replaceable, with no drop in pressure in the cooling system.

4. Arrangement in accordance with one of Claims 1 to 3, **characterised in that** an equalising tank (9) for the uptake of liquid refrigerant (20), for the purpose of reducing the level of condensate in the cooling system component (1), is arranged below the geodetic level of the injection hole (8) and is connected to the cooling system component (1) with an isolatable connection.

5. Arrangement in accordance with Claim 4, **characterised in that** an oil return line (10) for condensate discharge flows into the equalisation tank (9).

6. Arrangement in accordance with one of Claims 1 to 5, **characterised in that** a flow measurement device (17) is arranged on a refrigerant filling connection (16) of the cooling system.

7. Method for refrigerant fill level monitoring in cooling systems in accordance with one of the preceding claims, **characterised in that** filling of the cooling system with refrigerant occurs when
- the differential temperature dT
of the temperature T₆ in the refrigerant vapour space (19) of the reference evaporator (4) and
the condensate temperature T_{K} of the refrigerant in the condenser (1)
- is greater than a settable differential temperature limit dTG1.

8. Method in accordance with Claim 7, **characterised in that** the filling of the cooling system with refrigerant takes place until the settable differential temperature limit dTG1 is reached.

9. Method in accordance with Claim 7 or 8, **characterised in that**
- at settable intervals, the condensate level of the refrigerant in the condenser (1) is reduced to below the geodetic level of the injection hole (8) by condensate being released into the equalisation container (9) and if, in the process,
• the differential temperature _{d}T
of the temperature T₆ in the refrigerant vapour space (19) of the reference evaporator (4) and
the condensate temperature T_{K} of the refrigerant
• is greater than a settable differential temperature limit dTG2
• an error message is issued.

10. Method in accordance with Claim 9, **characterised in that**, as defective components, the heating unit (5) and the temperature sensor (6) are issued as an error message.

## Revendications

1. Disposition sur la surveillance et le réglage du niveau de produit réfrigérant dans les installations de réfrigération, présentant un composant frigorifique (1) avec un niveau de produit réfrigérant à l'état stationnaire et une entrée de vapeur (2) et une sortie de condensat (3) pour un produit réfrigérant **caractérisé par** un évaporateur de référence (4) isolé thermiquement du condensat (20) du produit réfrigérant dans le composant frigorifique (1), l'évaporateur de référence (4) présentant un orifice d'injection (8) pour le condensat (20) du composant frigorifique (1) et un chauffage (5) ainsi qu'une sortie de vapeur pour la vapeur du produit réfrigérant (21) et disposant d'un capteur de température (6) dans un compartiment vapeur du produit réfrigérant (19) de l'évaporateur de référence (4) et un dispositif de réglage (18).

2. Disposition selon la revendication 1, **caractérisée en ce que** le composant frigorifique (1) est configuré comme un condensateur et que l'évaporateur de référence (4) est intégré dans le condensateur.

3. Disposition selon la revendication 1 ou 2 **caractérisée en ce que** le capteur de température (6) est intégré dans une gaine, et/ou le chauffage (%) se trouve en dehors du système réfrigérant. La chaleur est alimentée par conduction thermique dans l'évaporateur de référence (4) et le capteur de température (6) et le chauffage (5) sont ainsi agencés dans l'installation de réfrigération de telle sorte qu'ils sont interchangeables.

4. Disposition selon une des revendications 1 à 3 **caractérisée en ce qu'**un réservoir de compensation (9) est installé sous le niveau géodésique de l'orifice d'injection (8) pour la collecte de produit réfrigérant liquide (20) dans le composant frigorifique (1) et relié au composant frigorifique (1) avec un raccord verrouillable.

5. Disposition selon la revendication 4 **caractérisée en ce qu'**un retour de l'huile (10) vers la purge de condensat arrive dans le réservoir de compensation (9).

6. Disposition selon l'une des revendications 1 à 5 **caractérisée en ce que** le débitmètre (17) est agencé à un raccord de remplissage en produit réfrigérant (16) de l'installation de réfrigération.

7. Procédure pour la surveillance du niveau de remplissage en produit réfrigérant dans les installations de réfrigération selon l'une des revendications susmentionnées **caractérisée en ce que** le remplissage en produit réfrigérant se fait lorsque
- la température différentielle dT
- la température T₆ du compartiment vapeur du produit réfrigérant (19) de l'évaporateur de référence (4) et
- la température du condensat T_{K} du produit réfrigérant du condensateur (1) est supérieure à une température différentielle seuil prescrite dTG1.

8. Procédure selon la revendication 7 **caractérisée en ce que** le remplissage en produit réfrigérant de l'installation de réfrigération se fait jusqu'à atteindre la température différentielle seuil prescrite dTG1.

9. Procédure selon la revendication 7 ou 8 **caractérisée en ce que**
le niveau de condensat du produit réfrigérant du condensateur (1) est baissé sous le niveau géodésique de l'orifice d'injection (8) à intervalles prescrits, en purgeant du condensat dans le réservoir de compensation (9). Lorsque
- la température différentielle _{d}T
de la température T₆ du compartiment vapeur du produit réfrigérant (19) de l'évaporateur de référence (4) et la température du condensat T_{K} du produit réfrigérant
- est supérieure à la température différentielle seuil dTG2, une
- alarme de dysfonctionnement est déclenchée.

10. Procédure selon la revendication 9 **caractérisée en ce qu'**une alarme de dysfonctionnement est déclenchée lorsque le chauffage (5) et le capteur de température (6) sont défectueux.
